Europäisches Patentamt

European Patent Office

Office européen des brevets

(11) Numéro de publication: **0 184 968 B1**

(12) **FASCICULE DE BREVET EUROPEEN**

(51) Int. Cl.⁴: **B 62 D 25/20**

(45) Date de publication du fascicule du brevet: **30.03.88**

(21) Numéro de dépôt: **85420224.9**

(22) Date de dépôt: **10.12.85**

(54) **Platelage de véhicule.**

(30) Priorité: **12.12.84 FR 8419393**

(43) Date de publication de la demande:
**18.06.86 Bulletin 86/25**

(45) Mention de la délivrance du brevet:
**30.03.88 Bulletin 88/13**

(84) Etats contractants désignés:
**AT BE CH DE GB IT LI NL**

(56) Documents cités:
**DE - A - 2 908 823**
**US - A - 3 116 950**

(73) Titulaire: **CEGEDUR SOCIETE DE TRANSFORMATION DE L'ALUMINIUM PECHINEY, 23, Rue Balzac, F-75008 Paris (FR)**

(72) Inventeur: **Bompard, Serge, 10, Hameau des Amandiers, F-38340 Voreppe (FR)**
Inventeur: **Iltis, Jean-Claude, 3, rue Lucien Maître, F-69300 Caluire Cuire (FR)**
Inventeur: **Mahl, René, 24, Impasse de Erables Villette d'Anthon, F-38280 Pont de Cheruy (FR)**
Inventeur: **Marrache, Henri, 24, rue Maxime Petit, F-91270 Vigneux Sur Seine (FR)**

(74) Mandataire: **Séraphin, Léon et al, PECHINEY 28, rue de Bonnel, F-69433 Lyon Cedex 3 (FR)**

ACTORUM AG

## Description

La présente invention est relative à un platelage porteur de charges pour véhicules routiers ou ferroviaires ou encore pour des véhicules rail-route.

La construction d'un platelage de véhicule exige généralement un grand nombre d'éléments de forme et dimensions différentes. Le problème qui se pose en vue de la réduction des coûts de fabrication, de la facilité de montage, de la réduction des stocks, est donc la diminution au minimum du nombre d'éléments permettant la fabrication d'un platelage de dimensions déterminées.

On sait qu'un platelage de véhicule est généralement constitué par un plancher, formé d'éléments plats longitudinaux, supportés par des traverses, lesquelles reposent perpendiculairement sur deux pièces longitudinales appelées «faux-châssis», fixées elles-mêmes sur les longerons du châssis proprement dit du véhicule. Le plancher et les traverses sont bordées longitudinalement et transversalement par des pièces appelées «brancard». Dans une variante, le faux-châssis repose sur les longerons du véhicule par l'intermédiaire d'une pièce de bois. Dans le cas de platelages «porte-conteneurs», certains dispositifs particuliers sont prévus pour l'arrimage des conteneurs et le platelage comporte en particulier des traverses avant et arrière au niveau du plancher, dites «traverses ISO».

Dans une autre variante, les éléments plats du plancher sont disposés transversalement directement sur le faux-châssis du véhicule.

L'invention concerne donc un platelage de véhicule comprenant soit un plancher formé d'éléments plats longitudinaux bordés par des pièces appelées «brancard» et/ou «traverses ISO» et supportés par des traverses, lesquelles reposent perpendiculairement sur deux pièces longitudinales appelées «faux-châssis» fixées elles-mêmes sur les longerons du châssis du véhicule, soit un plancher formé d'éléments plats transversaux reposant perpendiculairement sur deux pièces longitudinales appelées «faux-châssis» fixées elles-mêmes sur les longerons du châssis du véhicule (voir DE-A-2 908 823), caractérisé en ce que les éléments plats longitudinaux ou transversaux sont des profilés tubulaires avec un profil supérieur sensiblement plan et un profil inférieur ondulé, possédant, de chaque côté, deux branches longitudinales en forme de U (mâle et femelle) permettant l'emboîtement de deux profilés adjacents avec un jeu latéral variable. Ce jeu variable est généralement compris par exemple entre 0 et 10 mm, pour des profilés ayant une largeur de l'ordre de 200 mm. Le U femelle comporte deux branches dont les parties intérieures sont parallèles sur une longueur supérieure au jeu possible entre deux profilés adjacents. Le U mâle comporte deux prolongements à faces externes parallèles, dont la distance est très légèrement supérieure à celle de la distance intérieure du U femelle pour assurer un certain serrage élastique et de longueur sensiblement égale au jeu désiré. De plus, des profilés ouverts de largeur sensiblement égale à la moitié des éléments standards décrits ci-dessus mais de même épaisseur présentent des U d'emboîtements sur chaque côté de même nature (mâle-mâle ou femelle-femelle). Ces pièces permettent, comme on le verra plus loin, outre l'ajustement de la largeur du plancher, la liaison latérale avec les brancards.

Le brancard est constitué par un profilé en forme générale de C rectangulaire dont la branche supérieure porte à son extrémité un U femelle, emboîtable avec le U mâle des profilés du plancher; l'ouverture utile du C est égale ou très légèrement inférieure à la hauteur de l'extrémité des traverses sur lesquelles le brancard s'emboîte avec un léger serrage. La partie supérieure du C comporte une chambre semifermée limitée par deux lèvres opposées et bisautées permettant l'emboîtement élastique du support du pontet, comme expliqué plus loin.

Dans un mode de réalisation particulier, les extrémités des ailes des U sont conformées de manière à réaliser leur fixation élastique provisoire mutuelle. Par exemple, les extrémités des ailes de l'un des U possèdent une nervure longitudinale; celles-ci s'encastrent élastiquement dans une rainure longitudinale de faible profondeur, située près de l'extrémité correspondante de l'autre U. La largeur de la rainure est légèrement supérieure au jeu latéral permis entre deux profilés adjacents.

Les traverses et faux-châssis sont constitués d'un profilé bi-tubulaire de section générale rectangulaire portant à leur partie supérieure une aile longitudinale située dans le plan supérieur du profilé, destinée à leur fixation par rivets aux éléments du plancher ou aux traverses. Dans le cas où le faux-châssis repose sur le châssis par l'intermédiaire d'une pièce parallélipipédique en bois, la partie inférieure de la traverse est munie de deux crans latéraux externes permettant l'emboîtement élastique du support du pontet, en position inversée, qui sert alors de pièce d'appui. Le support du pontet est un profilé en forme générale de I dont la base est prolongée, d'un seul côté, en forme de S ou de Z et dont la branche supérieure, inclinée par rapport à l'axe du I pour posséder une certaine élasticité, présente la même forme en S ou en Z en regard de ceux de la base. La largeur de ce I est sensiblement égale ou très légèrement inférieure à la hauteur de la chambre semi-fermée du brancard et la distance des fonds de crans en S ou Z est sensiblement égale à la distance des lèvres du brancard.

Le brancard d'extrémité (par rapport aux profilés de plancher) est fixé à ce dernier par l'intermédiaire d'une tôle pliée, comportant deux ailes parallèles reliées par une âme oblique; les fixations sont de préférence réalisées par rivets aveugles.

En vue d'augmenter la rigidité de cette pièce de liaison, celle-ci peut être emboutie localement suivant un pas déterminé sous forme d'un dièdre situé sur l'arête supérieure entre l'aile et l'âme de celle-ci, et dont l'arête est perpendiculaire à la direction longitudinale de la tôle pliée.

Les traverses ISO sont réalisées par l'assemblage par soudage de 2 demi-traverses identiques ayant la forme générale d'un C rectangulaire et munies vers l'extérieur d'une aile parallèle aux branches du C et située à une distance du sommet du C égale à l'épaisseur du plancher. Les extrémités des branches du C comportent, l'une, un chanfrein externe et un bourrelet interne, l'autre un chanfrein externe et un prolongement interne situé à la base de ce chanfrein. La réunion des deux demi-traverses permet de constituer le logement en forme de V du cordon de soudure de ces deux demi-traverses.

L'angle inférieur du C possède un chanfrein externe et l'angle supérieur un chanfrein associé à une nervure horizontale externe qui permet le soudage de la tôle pliée de fermeture.

Par ailleurs, dans les zones d'assemblage entre les divers éléments du platelage, les profilés comportent des bossages ou des zones amincies de manière à ce que l'épaisseur totale à assembler ait une valeur sensiblement constante; ceci permet d'utiliser un grand nombre de rivets d'une seule longueur.

L'invention sera mieux comprise à l'aide des exemples suivants, illustrés par les figures 1 à 8 suivantes:

la figure 1 représente un éclaté partiel du platelage selon l'invention,

la figure 2 représente une coupe transversale d'un profilé de plancher,

la figure 3 représente une coupe transversale d'un demi-profilé de plancher,

la figure 4 représente une coupe transversale d'un brancard,

la figure 5 représente une coupe transversale d'une traverse ou d'un faux-châssis,

la figure 5A représente une coupe transversale d'un faux-châssis destiné à être monté sur bois,

la figure 6 représente une coupe transversale d'un pontet,

la figure 7 représente la coupe transversale d'une demi-traverse ISO et de la fermeture,

la figure 8 représente la coupe de la fixation d'un brancard d'extrémité de platelage,

la figure 9 représente la coupe transversale d'un emboîtement élastique.

Sauf indication contraire et pour faciliter les descriptions, les pièces seront supposées être situées en position d'utilisation. Elles sont de préférence réalisées en alliage d'Al, par exemple, type 6005 état T5 pour les pièces filées et du 5086 état H111 pour les pièces obtenues à partir de produits laminés, selon les désignations de l'ALUMINIUM ASSOCIATION.

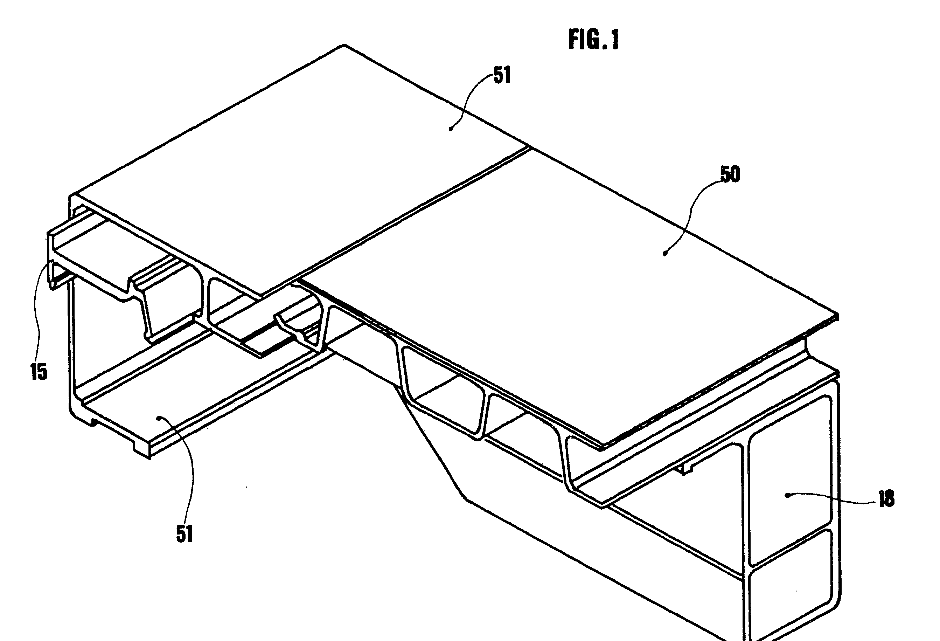

La figure 1 représente la disposition relative de différents éléments du platelage: profilé de plancher (50), brancard (51), traverse (18), pontet (15).

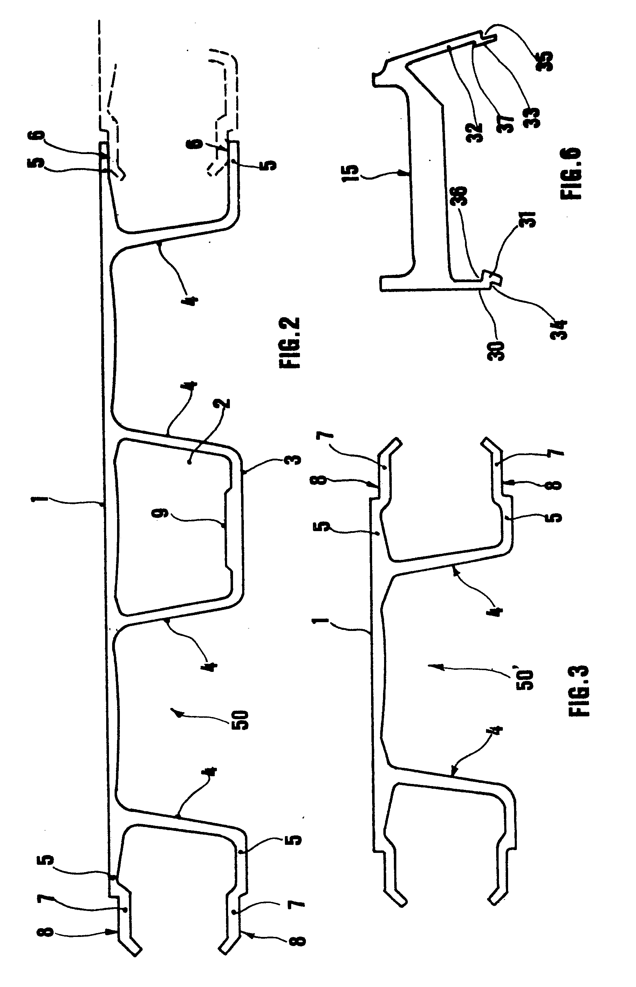

La figure 2 représente la coupe transversale d'un profilé de plancher (50), comportant une surface supérieure (1) plane, une partie centrale tubulaire (2) et une face inférieure (3) nervurée, nervures dont les flans (4) sont divergents vers le bas. Le profilé comporte à ses extrémités deux ailes (5) en forme de U; à droite (sur le dessin), ces ailes comportent deux faces internes opposées (6) parallèles, qui constituent la partie femelle dans laquelle s'engage le U mâle du profilé adjacent (représenté en traits interrompus); à gauche (sur le dessin), les deux ailes en U (5) sont prolongées par deux ailes en retrait (7) constituant le U mâle dont la distance entre les faces externes parallèles (8) est égale (à un faible serrage près) à la distance des faces internes (6) de l'autre U. Bien que la surface (1) ait été représentée plane, elle peut bien sûr présenter un profil différent, par exemple des rainures ou striures longitudinales ou encore porter des reliefs ou gravures anti-dérapants.

La figure 3 représente un profilé ouvert (50'), de constitution semblable au profilé de la figure 2, sauf le canal central, et muni de deux U mâles conformément à ceux de la figure 2. Sa largeur est sensiblement la moitié de celle du profilé représenté figure 2.

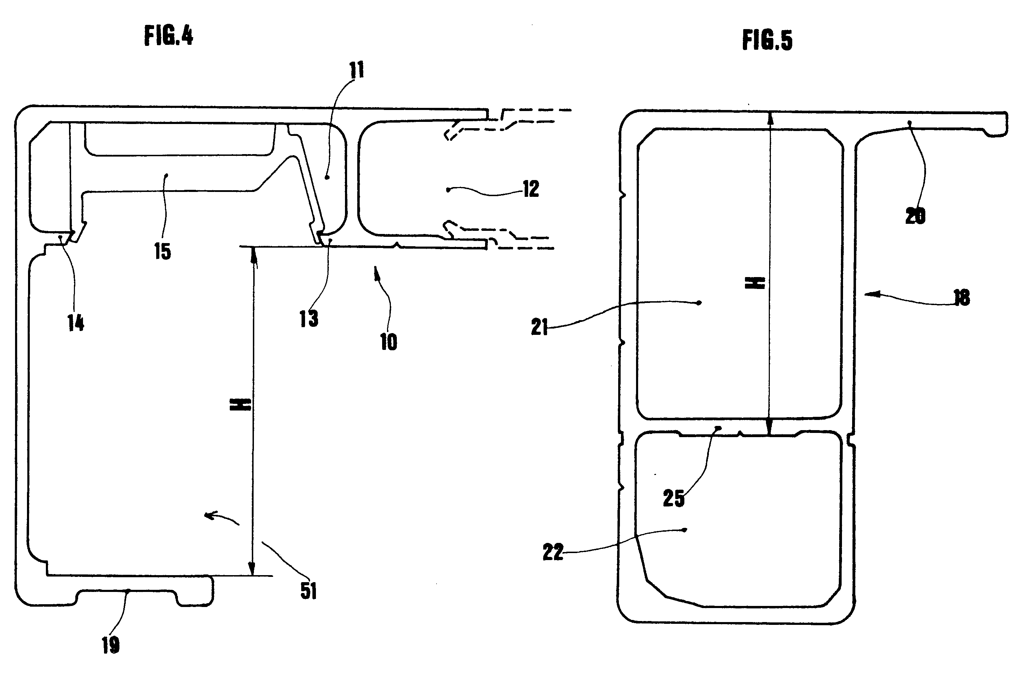

La figure 4 représente la coupe transversale d'un brancard (51) ayant la forme générale d'un C rectangulaire, dont la branche supérieure (10) comporte une chambre semi-fermée (11) et un U d'extrémité femelle (12) dans lequel s'engage les U mâles du plancher (en pointillés).

La base du U (12) comporte une lèvre (13) en biseau, en regard d'une lèvre opposée (14) également bisautée, solidaire du corps du C. Comme cela est représenté en traits fins, ces 2 lèvres permettent la fixation par emboîtement élastique du support de pontet (15). Bien sûr, la hauteur utile du brancard, marquée H est sensiblement égale ou très légèrement inférieure à la hauteur de l'extrémité de la traverse sur laquelle le brancard s'emboîte.

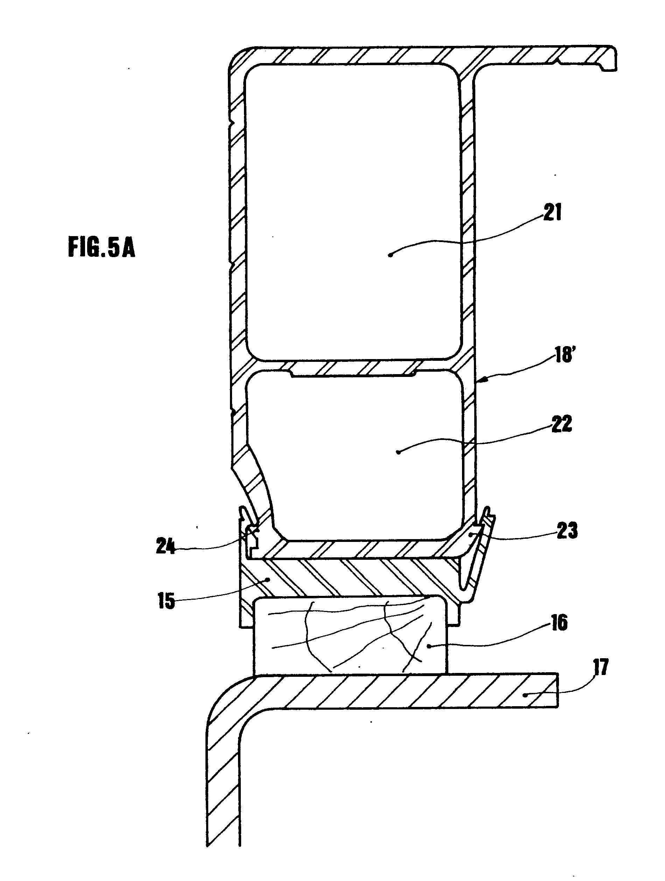

La figure 5 représente une coupe transversale des traverses (18) ou d'un faux-châssis (18'). Ce profilé rectangulaire comporte une aile latérale (20) à sa partie supérieure. Il comporte deux chambres (21 et 22), la hauteur de la chambre supérieure, marquée H, étant sensiblement égale à l'ouverture H du brancard (fig. 4). En effet, à l'extrémité de la traverse, on élimine la chambre (22) sur une certaine longueur.

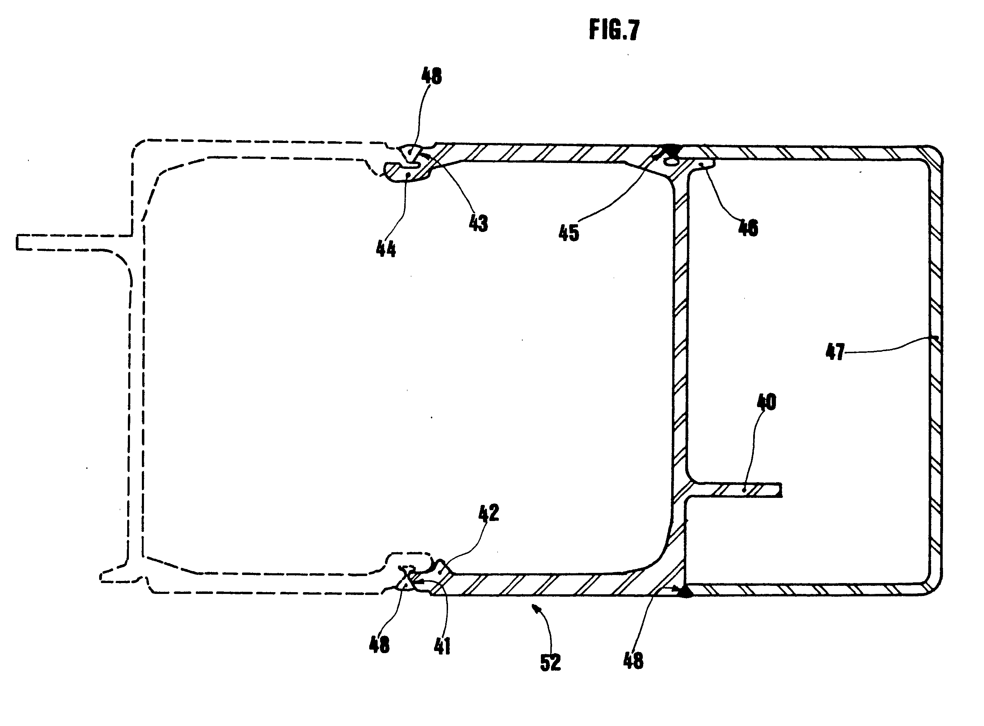

La figure 5a montre le montage du faux-châssis (18') sur le châssis proprement dit (17) par l'intermédiaire d'une pièce de bois (16) et du support du pontet (15) en position inversée par rapport à la figure 4. Pour cela, la base de la chambre (22) a été modifiée pour obtenir deux nervures triangulaires (23, 24) opposées au voisinage de sa base, pour la fixation élastique du pontet (15) (fig. 6).

La figure 6 représente le pontet (15) qui a la forme générale d'un I (utilisé en position couchée) comportant à sa base une aile horizontale (30), saillant vers le haut (31), avec un décrochement externe (34) et un décrochement interne (36) et à son sommet une branche inclinée (32) comportant également une saillie interne (33) en vis à vis de la saillie (31) et un décrochement externe (35) et un décrochement interne (37).

Dans la position représentée à la figure 4, les décrochements (34) et (35) s'engagent sur les lèvres (13) et (14) du brancard; dans la position représentée à la figure 5a, les décrochements internes (36, 37) s'engagent sur les nervures (23, 24) du faux-châssis.

La figure 7 représente la coupe transversale d'une demi-traverse ISO (52) ainsi que la fermeture (avant ou arrière) du platelage (47).

La demi-traverse ISO (52) a la forme générale d'un C rectangulaire dont la branche verticale comporte une aile horizontale (40) située à une distance égale à l'épaisseur du plancher de sa base. Les extrémités des branches du C comportent d'une part une partie chanfreinée (41) et un bourrelet (42), d'autre part une partie chanfreinée (43) prolongée par une petite aile (44). La réunion de deux demi-traverses tête-bêche jusqu'à butée de la petite aile contre le bourrelet délimite deux sillons en V pour le dépôt d'un cordon de soudure (48).

Par ailleurs, à l'angle du C adjacent à l'aile (44) on trouve également un chanfrein (45) et une nervure horizontale (46) qui permet le positionnement et le soudage de la fermeture (47) généralement constituée par une tôle pliée. L'autre angle du C comporte également un chanfrein (48) dans le même but.

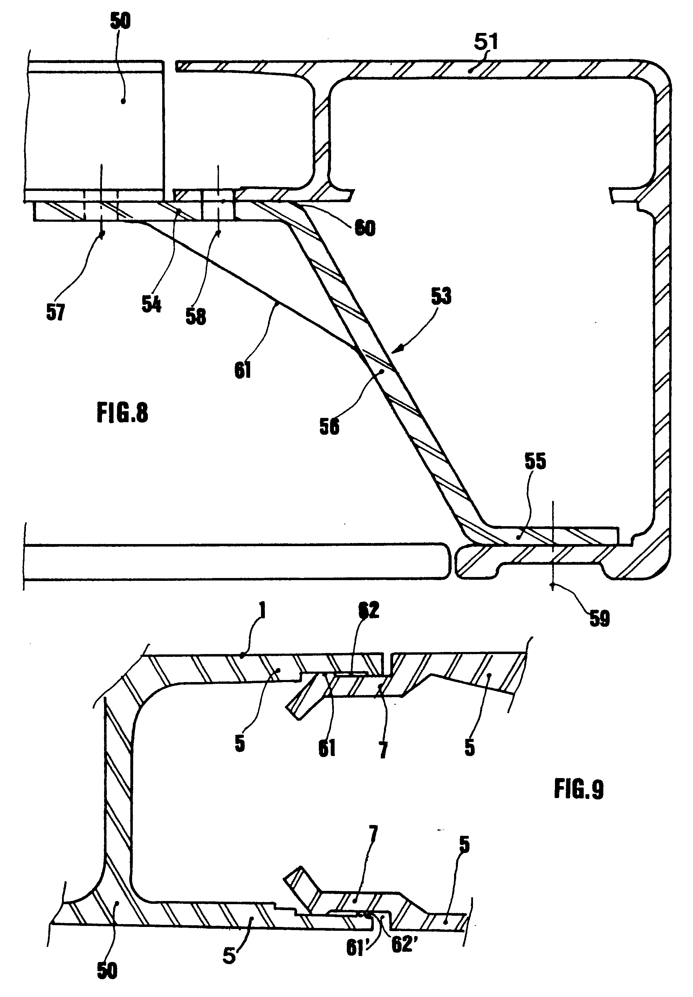

La figure 8 représente la coupe d'un brancard d'extrémité (51) fixé à l'extrémité des profilés de plancher (50) par l'intermédiaire d'une tôle pliée (53) comportant deux ailes parallèles (54, 55) reliées par une âme oblique (56). Celle-ci est fixée à la partie inférieure du plancher (50), à la branche inférieure du U du brancard et à la branche inférieure du C du brancard par des rivets aveugles (non représentés) aux emplacements tels que (57, 58, 59).

Les dièdres de raidissement de la tôle pliée sont répartis avec un pas déterminé le long de l'arête (60) située entre l'aile supérieure (56) et l'âme (55), ceux-ci ayant comme arête les lignes telles que (61).

La figure 9 représente la coupe transversale d'un emboîtement élastique provisoire de deux profilés de plancher. Les ailes latérales de l'un de U des profilés (50, 50') possèdent une nervure longitudinale (61, 61') qui s'engage élastiquement dans une rainure longitudinale de faible profondeur (62, 62') pour permettre leur liaison mutuelle. La largeur des rainures (62, 62') est supérieure au jeu latéral permis pour les profilés (50, 50'). Cette disposition peut également s'appliquer au U d'extrémité femelle (12) des brancards (51).

On remarquera par exemple aux figures 2 ou 5, les bossages (9) ou (25) situés à l'intérieur de la partie tubulaire, ou encore à la figure 4, l'amincissement (19) de l'aile inférieure du C permettant d'utiliser des rivets d'une seule longueur.

Outre l'avantage économique évident apporté par le petit nombre de profilés nécessaires à la construction d'un platelage complet, l'invention procure encore les avantages supplémentaires suivants par rapport à l'art antérieur:

la constitution modulaire du plancher permet d'obtenir des planchers de différentes largeurs et d'ajuster celles-ci à des valeurs précises en raison des jeux autorisés entre profilés;

ces jeux permettent également de compenser les défauts de rectitude et/ou de parallélisme des profilés;

la face inférieure du platelage qui a l'aspect d'une tôle ondulée, évite la rétention des projections dues au roulage, en permet un nettoyage aisé et présente une surface facilement accessible pour assurer les protections de surface initiale (par peinture par exemple) ou son entretien. Cette surface est par ailleurs moindre que celle des platelages en profilés avec raidisseur en forme de T renversé;

la fixation du platelage sur les traverses se fait aisément à l'aide de rivets aveugles entre le fond de la partie tubulaire du plancher et l'aile latérale de la traverse (au lieu du système de brides fixé par vis, rondelle et écrou freiné);

pour changer un élément de platelage endommagé, il suffit de désolidariser quelques éléments adjacents, de les faire glisser grâce aux jeux latéraux, les uns vers les autres en butée de manière à obtenir un débattement suffisant pour retirer le profilé défectueux; la mise en place du profilé de remplacement se fait de manière inverse;

comme nous l'avons vu, le découpage des extrémités de traverses (nécessaire par le débattement des roues) permet l'emboîtement du brancard et sa fixation au moyen de rivets aveugles sur celles-là.

**Revendications**

1. Platelage de véhicule comprenant soit un plancher formé d'éléments plats (50) longitudinaux bordés par des pièces appelées «brancard» (51) et/ou «traverses ISO» (52) et supportés par des traverses (18), lesquelles reposent perpendiculairement sur deux pièces longitudinales appelées «faux-châssis» (18') fixées elles-mêmes sur les longerons du châssis du véhicule, soit un plancher formé d'éléments plats (50) transversaux reposant perpendiculairement sur deux pièces longitudinales appelées «faux-châssis» fixées elles-mêmes sur les longerons du châssis du véhicule, caractérisé en ce que les éléments plats longitudinaux ou transversaux (50) sont des profilés tubulaires avec un profil supérieur (1) sensiblement plan et un profil inférieur (2) ondulé, possédant, de chaque côté, deux branches longitudinales en forme de U 65, 6, 7, 8) (mâle et femelle) permettant l'emboîtement de deux profilés adjacents avec un jeu latéral variable.

2. Platelage de véhicule selon la revendication 1, caractérisé en ce que les éléments plats comprennent au moins un élément plan (50') possédant de chaque côté deux branches longitudinales en forme de U, de même nature (mâle ou femelle).

3. Platelage de véhicule selon l'une des revendications 1 ou 2, caractérisé en ce que le brancard (51) est constitué d'un profilé en forme générale de C rectangulaire dont la branche supérieure (10) comporte à son extrémité un U femelle (12), qui s'emboîte avec un U mâle du plancher (50) et dont la hauteur utile de l'ouverture (H) est sensiblement égale à la hauteur d'extrémité des traverses et qui comporte une chambre semi-fermée (11), limitée par deux lèvres biseautées (13, 14) sur lesquelles peut se fixer élastiquement le support de pontet (15).

4. Platelage selon l'une des revendications 1 ou 2, caractérisé en ce que les extrémités des U d'assemblage des profilés du plancher (50) et des brancards (51) sont conformés de manière à réaliser une fixation élastique provisoire mutuelle (61, 61', 62, 62').

5. Platelage selon l'une des revendications 1 à 4, caractérisé en ce que les traverses (18) et faux-châssis (18') sont des profilés fermés rectangulaires bi-tubulaires.

6. Platelage selon la revendication 5, caractérisé en ce que le faux-châssis (18') porte à sa partie inférieure deux nervures externes triangulaires (23, 24) sur ses faces latérales opposées permettant de fixer élastiquement le support de pontet (15).

7. Platelage selon l'une des revendications 1 à 6, caractérisé en ce que le support de pontet (15) est constitué par un profilé de forme générale de I dont la base (30) est prolongée d'un seul côté, en forme de S ou de Z (31, 34, 36) et dont la partie supérieure (32), inclinée par rapport au corps du I présente à son extrémité une forme de S ou de Z (33, 35, 37), en regard de ceux de la base, la largeur totale du I étant sensiblement égale à la hauteur de la chambre semi-fermée (11) du brancard (51) et la distance des fonds des crans (34, 35) des S ou Z étant égale à la distance des lèvres (13, 14) de cette chambre semi-fermée ou des rainures externes triangulaires (23, 24) du faux-châssis (18').

8. Platelage selon la revendication 1, caractérisé en ce que les traverses ISO (52) sont constituées par la réunion par soudage de deux demi-traverses ISO identiques, profilés ayant la forme générale d'un C rectangulaire, munis vers l'extérieur d'une aile parallèle (40) aux branches du C et située à une distance du sommet du C égale à l'épaisseur du plancher, l'extrémité de l'une des branches du C portant un chanfrein externe (41) et un bourrelet interne (42), l'extrémité de l'autre branche du C portant un chanfrein externe (43) muni d'un prolongement interne (44).

9. Platelage selon la revendication 8, caractérisé en ce que la demi-traverse ISO comporte un chanfrein d'angle côté aile externe (48) et un chanfrein (45) d'angle muni d'une nervure (46) plane côté opposé à l'aile (40).

10. Platelage suivant l'une des revendications 1 à 9, caractérisé en ce que la liaison entre les profilés de plancher (50) et les brancards (51) est assurée par une tôle pliée (53) comportant deux ailes parallèles (54, 55) et une âme oblique (56).

11. Platelage suivant la revendication 10, caractérisé en ce que la tôle pliée est raidie par les dièdres transversaux (61) répartis le long de l'arête (60), située entre l'aile supérieure (54) et l'âme (56).

12. Platelage selon l'une des revendications 1 à 11, caractérisé en ce que les liaisons entre les différents éléments sont réalisées à l'aide des rivets aveugles de longueur sensiblement constante.

## Claims

1. Vehicle flooring comprising either a floor formed by longitudinal flat elements (50) bordered by so-called «shaft» members (51) and/or «ISO cross bars» (52) and supported by cross bars (18) resting perpendicularly on two so-called «sub frame» longitudinal members (18) in turn fixed on the side-members of the vehicle chassis, or a floor formed by transverse flat elements (50) resting perpendicularly on two so-called «sub frame» longitudinal members in turn fixed on the side members of the vehicle chassis, characterised in that the longitudinal or transverse flat elements (50) are tubular shaped sections with a substantially flat upper profile (1) and an undulating lower profile (2) possessing, on each side, two longitudinal U-shaped branches (5, 6, 7, 8) (male and female) allowing two adjacent shaped sections to nest with a variable lateral clearance.

2. Vehicle flooring according to Claim 1, characterised in that the flat elements comprise at least one flat element (50') possessing, on each side, two U-shaped longitudinal branches of the same type (male or female).

3. Vehicle flooring according to one of Claims 1 or 2, characterised in that the shaft (51) is constituted by a shaped section having the general shape of a rectangular C of which the upper branch (10) has at its end a female U (12) which nests with a male U in the floor (50) and of which the useful opening height (H) is substantially equal to the end height of the cross bars and which comprises a half-closed chamber (11) which is limited by two bevelled lips (13, 14) on which the strap support (15) can be fixed elastically.

4. Flooring according to one of Claims 1 or 2, characterised in that the ends of the connecting U's of the shaped sections of the floor (50) and of the shafts (51) are shaped so as to produce a temporary reciprocal elastic fixing (61, 61', 62, 62').

5. Flooring according to one of Claims 1 to 4, characterised in that the cross bars (18) and sub frames (18') are bi-tubular rectangular closed shaped sections.

6. Flooring according to Claim 5, characterised in that the sub frame (18') bears, on its lower portion, two external triangular ribs (23, 24) on its opposing lateral faces, allowing the strap support (15) to be fixed elastically.

7. Flooring according to one of Claims 1 to 6, characterised in that the strap support (15) is constituted by a shaped section having the general shape of a I of which the base (30) is extended on one side in the form of a S or Z (31, 34, 36) and of which the upper portion (32) which is at an inclination to the body of the I, is S or Z shaped at its end (33, 35, 37), the S or Z facing those at the base, the total width of the I being substantially equal to the height of the half-closed chamber (11) of the shaft (51), and the distance between the bases of the notches (34, 35) of the S or Z being equal to the distance of the lips (13, 14) of this half-closed chamber or of the triangular external grooves (23, 24) of the sub frame (18').

8. Flooring according to Claim 1, characterised in that the ISO cross bars (52) are constituted by a welded join between two identical half ISO cross bars, these shaped sections having the general shape of a rectangular C and being equipped towards the exterior with a wing (40) parallel to the branches of the C and located at a distance from the top of the C which is equal to the thickness of the floor, the end of one of the branches of the C bearing an external bevel (41) and an internal bead (42), the end of the other branch of the C bearing an external bevel (43) equipped with an internal extension (44).

9. Flooring according to Claim 8, characterised in that the ISO half cross bar comprises an angle bevel (48) on the external wing side and an angle bevel (45) equipped with a flat rib (46) on the side opposite the wing (40).

10. Flooring according to one of Claims 1 to 9, characterised in that the connection between the shaped sections (50) of the floor and the shafts (51) is provided by a folded metal sheet (53) comprising two parallel wings (54, 55) and an oblique core.

11. Flooring according to Claim 10, characterised in that the folded sheet metal is stiffened by transverse dihedrons (61) distributed along the edge (60) situated between the upper wing (54) and the core (56).

12. Flooring according to one of Claims 1 to 11, characterised in that the connections between the various elements are produced by means of blind rivets of substantially constant length.

**Patentansprüche**

1. Fahrzeugbodenplatte mit entweder einem Boden aus flachen Längselementen (50), die von «Längsträgern» (51) genannten Teilen und/oder «ISO-Traversen» (52) genannten Teilen begrenzt sind und von Traversen (18) getragen werden, die senkrecht auf zwei «Nebenrahmen» (18') genannten Längsteilen ruhen, die wiederum an den Längsträgern des Fahrzeugchassis befestigt sind, oder einem Boden aus flachen querliegenden Elementen (50), die senkrecht auf zwei «Nebenrahmen» genannten Längsteilen ruhen, die wiederum auf den Längsträgern des Fahrzeugchassis ruhen, dadurch gekennzeichnet, dass die längs- oder querliegenden flachen Elemente (50) röhrenförmige Profile mit einem oberen, im wesentlichen ebenen Profil (1) und einem unteren gewellten Profil (2) sind, dass auf jeder Seite zwei Längsarme in U-Form (5, 6, 7, 8, Nut und Feder) aufweist, um das Ineinandergreifen von zwei benachbarten Profilen mit variablem seitlichen Spiel zu ermöglichen.

2. Fahrzeugbodenplatte nach Anspruch 1, dadurch gekennzeichnet, dass die flachen Elemente mindestens ein ebenes Element (50') mit auf jeder Seite zwei gleichartigen (Nut und Feder) Längsarmen in U-Form umfassen.

3. Fahrzeugbodenplatte nach Anspruch 1 oder 2, dadurch gekennzeichnet, dass der Längsträger (51) aus einem Profil in der allgemeinen Form eines rechteckigen C besteht, dessen oberer Arm (10) an seinem Ende eine Nut in U-Form (12) aufweist, die in die Feder in U-Form des Bodens (50) passt und dessen zweckmässige Öffnungshöhe (H) praktisch gleich der Höhe der Traversenenden ist und einen halbgeschlossenen Raum (11) umfasst, der durch zwei abgeschrägte Ränder (13, 14) begrenzt ist, an die der Bügelträger (15) elastisch angelegt werden kann.

4. Bodenplatte nach Anspruch 1 oder 2, dadurch gekennzeichnet, dass die Enden der U-förmigen Profile des Bodens (50) und der Längsträger (51) so geformt sind, dass sie eine gegenseitige, provisorische elastische Befestigung (61, 61', 62, 62') bilden.

5. Bodenplatte nach einem der Ansprüche 1 bis 4, dadurch gekennzeichnet, dass die Traversen (18) und der Nebenrahmen (18') geschlossene, rechteckige zweirohrige Profile sind.

6. Bodenplatte nach Anspruch 5, dadurch gekennzeichnet, dass der Nebenrahmen (18') in seinem unteren Teil zwei dreieckige äussere Rippen (23, 24) an gegenüberliegenden Seitenwänden zur elastischen Befestigung des Bügelträgers (15) aufweist.

7. Bodenplatte nach einem der Ansprüche 1 bis 6, dadurch gekennzeichnet, dass der Bügelträger (15) aus einem Profil in der allgemeinen Form eines Doppel-T besteht, dessen Basis (30) nur auf einer Seite in S- oder Z-Form (31, 34, 36) verlängert ist und dessen oberer, in Bezug auf den Körper des Doppel-T geneigter Teil (32) am Ende als S- oder Z-Form (33, 35, 37) gegen die S- oder Z-Formen der Basis ausgebildet ist, wobei die Gesamtbreite des Doppel-T praktisch gleich der Höhe des halbgeschlossenen Raums (11) des Längsträgers (51) ist und der Abstand der Böden der S- oder Z-förmigen Einkerbungen (34, 35) gleich dem Abstand der Ränder (13, 14) dieses halbgeschlossenen Raums oder der äusseren dreieckigen Rippen (23, 24) des Nebenrahmens (18') ist.

8. Bodenplatte nach Anspruch 1, dadurch gekennzeichnet, dass die ISO-Traversen (52) aus zusammengeschweissten gleichen ISO-Halbtraversen bestehen, die die allgemeine Form eines rechteckigen C haben, aussen einen Flügel (40) aufweisen, der parallel zu den Armen des C ist und sich auf dem C in einer Höhe, die der Dicke des Bodens entspricht, befindet, wobei das Ende eines der Armes des C eine äussere Abschrägung (41) und eine innere Wulst (42) aufweist und das Ende des anderen Arms des C eine äussere Abschrägung (43) mit einer inneren Verlängerung (44) trägt.

9. Bodenplatte nach Anspruch 8, dadurch gekennzeichnet, dass die ISO-Halbtraverse eine Winkelabschrägung zur Seite des äusseren Flügels (48) und eine Winkelabschrägung (45) mit einer ebenen Rippe (46) zur dem Flügel (40) gegenüberliegenden Seite aufweist.

10. Bodenplatte nach einem der Ansprüche 1 bis 9, dadurch gekennzeichnet, dass die Verbindung zwischen den Profilen des Bodens (50) und der Längsträger (51) durch ein gefaltetes Blech (53) mit zwei parallelen Flügeln (54, 55) und einem schrägen Kern (56) erfolgt.

11. Bodenplatte nach Anspruch 10, dadurch gekennzeichnet, dass das gefaltete Blech durch Längsdieder (61) verstärkt ist, die entlang der Kante (60) zwischen dem oberen Flügel (54) und dem Kern (56) angeordnet sind.

12. Bodenplatte nach einem der Ansprüche 1 bis 11, dadurch gekennzeichnet, dass die Verbindungen zwischen den verschiedenen Elementen mit Blindnieten von praktisch konstanter Länge erfolgt.

FIG. 1

0 184 968

FIG.2

FIG.3

FIG.6

0 184 968

FIG.4

FIG.5

0 184 968

**FIG.5A**

FIG.7

FIG.8

FIG.9